# FASCICULE DE BREVET EUROPEEN

(11) **EP 0 990 284 B1**
(45) Date de publication et mention de la délivrance du brevet: **16.06.2004**
(21) Numéro de dépôt: 98932210.2
(22) Date de dépôt: 16.06.1998
(51) Int. Cl.: H01S 3/10

(54) **LASER A MIROIR A CONJUGAISON DE PHASE PAR MELANGE A QUATRE ONDES**
LASER MIT PHASENKONJUGATIONSSPIEGEL UNTER VERWENDUNG VON VIERWELLENMISCHUNG
PHASE-CONJUGATION LASER MIRROR WITH FOUR-WAVE MIXING

(30) Priorité: 17.06.1997 FR 9707483
(43) Date de publication de la demande: 05.04.2000
(73) Titulaire: Ouhayoun, Michel, 75004 Paris (FR)
(72) Inventeur: Ouhayoun, Michel, 75004 Paris (FR)
(86) Numéro de dépôt international: PCT/FR1998/001257
(87) Numéro de publication internationale: WO 1998/058429

(56) Documents cités:
- WO-A-95/25367
- FR-A- 2 574 224
- MOCHALOV G T ET AL: "EMISSION OF SOLID-STATE LASERS WITH A SELF-PUMPED PHASE-CONJUGATION RESONATOR" OPTICS AND SPECTROSCOPY, vol. 65, no. 3, septembre 1988, page 302 XP000037616
- KIREEV S E ET AL: "Copper vapor laser with a wavefront-reversing mirror induced in the active medium" KVANTOVAYA ELEKTRONIKA, MOSKVA, APRIL 1986, USSR, vol. 13, no. 4, pages 866-868, XP002058282 ISSN 0368-7147

## Description

Un faisceau laser, qui, après une première traversée d'un milieu non-homogène, a subi une distorsion de phase, retrouve son profil initial après réflexion sur un miroir à conjugaison de phase et nouvelle traversée du même milieu.

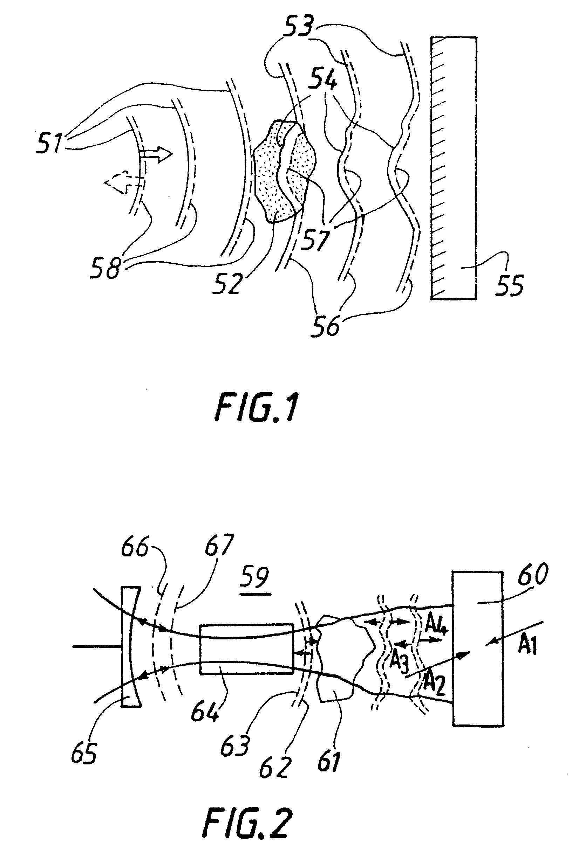

En référence à la figure 1 ci-jointe, l'onde incidente pure 51, après traversée du milieu 52, devient une onde 53 qui comporte une portion 54 en retard de phase. Après réflexion sur le miroir 55, à conjugaison de phase, l'onde 53 devient une onde réfléchie 56 avec une portion 57 en avance de phase. Cette onde 56, après traversée du milieu 52, ici, retardateur de phase, devient une onde réfléchie pure 58.

En référence à la figure 2, placé à une extrémité d'une cavité laser 59, en face d'un miroir de sortie 65 à l'autre extrémité, un miroir 60 à conjugaison de phase, par mélange à quatre ondes, corrige en temps réel les déformations de faisceau dont le milieu de gain 64 peut être responsable et illustrées schématiquement par le milieu 61.

Après distorsion dans le milieu 61, l'onde incidente A4 frappant le miroir 60 est réfléchie en une onde A3 qui, après traversée du milieu 61, devient une onde 62 de même profil que l'onde initiale 63.

Le faisceau laser qui sort par le miroir 65, et quel que soit le nombre de réflexions subies, a nécessairement juste avant de sortir, traversé le milieu de distorsion 61 deux fois, en sens opposés, avec réflexion intercalaire sur le miroir 60, si bien qu'il sort avec un profil pur comme illustré par les ondes 66, 67. Grâce au miroir 60, tout effet cumulatif de distorsion est évité.

Un miroir à conjugaison de phase, comme parfaitement enseigné par le brevet américain 4233571, comporte un milieu non linéaire pompé par deux faisceaux et, avantageusement, son milieu non linéaire est le milieu amplificateur du résonateur laser lui-même. Dans ce cas, le résonateur ne comporte qu'un seul miroir réfléchissant classique servant à la fois de miroir de sortie et de moyen de création par réflexion d'un des deux faisceaux de pompage du miroir à conjugaison de phase.

Les miroirs à conjugaison de phase par mélange à quatre ondes apportent une bonne solution au problème de l'émission des résonateurs laser, continus ou impulsionnels, solides ou gazeux, sur un mode transverse unique, a priori le mode fondamental d'ordre le plus bas (TEMoo), avec une divergence de faisceau la plus réduite et une intensité de faisceau la plus forte possibles, comme on peut les rechercher dans les lasers de puissance, par exemple ceux utilisés pour l'usinage des matériaux, ces miroirs, comme rappelés ci-dessus, palliant bien les défauts d'homogénéité des milieux laser.

Dans les lasers solides pompés par lampe flash, la dissipation de chaleur dans le barreau, consécutive à l'absorption de la lumière de la lampe flash non convertie en énergie cohérente, introduit un effet de lentille thermique qui conduit le barreau laser à se comporter comme une lentille dont la distance focale équivalente dépend de l'échauffement subi, ce qui nuit à la stabilité du mode émis. Le défaut d'uniformité radiale de l'indice de réfraction dans le milieu laser est aussi à l'origine d'un effet de biréfringence qui provoque des pertes pour le mode fondamental.

Dans les lasers à gaz, les points chauds dans la décharge rompent l'uniformité de gain et d'indice du milieu amplificateur.

Des résonateurs laser à miroir à conjugaison de phase par mélange à quatre ondes ont déjà été proposés, mais avec un pompage externe, comme par exemple dans les brevets américain 4233571 et européen 0190515. Ces dispositifs de l'art antérieur font appel à un deuxième laser de pompage, c'est-à-dire à des moyens actifs, pour créer le miroir à conjugaison de phase.

La présente invention vise à s'affranchir de ce laser de pompage du miroir à conjugaison de phase.

A cet effet, la présente invention concerne tout d'abord un laser à miroir à conjugaison de phase par mélange à quatre ondes dans son milieu amplificateur, caractérisé par le fait que ledit miroir est généré par des moyens exclusivement passifs.

Il faut entendre par moyens exclusivement passifs des moyens ne générant pas de photons.

Dans le laser de l'invention, il est prévu un milieu amplificateur unique dans une cavité de Fabry-Pérot et lesdits moyens passifs sont agencés pour générer des faisceaux de pompage formant une onde stationnaire dans ladite cavité.

Dans un laser non conforme à l'invention, lesdits moyens passifs comprennent aux deux extrémités de la cavité des miroirs pour créer deux faisceaux croisés en X avec une zone centrale d'intersection formant miroir, chaque faisceau s'étendant entre un miroir de fond de cavité, à une extrémité, de la cavité et un miroir de repliement, à l'autre extrémité de la cavité, chaque faisceau formant un réseau dans le milieu laser sur lequel se réfléchit, avec conjugaison de phase, une onde sonde de l'autre faisceau se propageant d'un miroir d'extrémité vers la zone centrale miroir.

Finalement, cette forme de réalisation, non conforme à l'invention, est remarquable par sa simplicité. Ce laser correspond schématiquement à un laser classique replié sur lui-même et croisé.

MOCHALOV G T ET AL: 'EMISSION OF SOLID-STATE LASERS WITH A SELF-PUMPED PHASE-CONJUGATION RESONATOR'OPTICS AND SPECTROSCOPY, vol. 65, no. 3, septembre 1988, page 302, divulgue un laser à miroir à conjugaison de phase par mélange à quatre ondes dans un milieu amplificateur unique, le milieu amplificateur étant contenu dans une cavité de Fabry-Pérot, et ledit miroir étant un miroir soumis à un pompage intra cavité, ledit miroir étant généré par des moyens exclusivement passifs. Lesdits moyens passifs comprennent des miroirs pour créer deux faisceaux croisés en X avec une zone central d'intersection dans le milieu amplificateur formant un miroir à conjugaison de phase.

KIREEV S E ET AL: 'Copper vapor laser with a wavefront-reversing mirror induced in the active medium' KVANTOVAYA ELEKTRONIKA, MOSKVA, APRIL 1986, USSR, vol. 13, no. 4, pages 866-868, divulgue un laser à miroir à conjugaison de phase par mélange à quatre ondes dans un milieu amplificateur unique, le milieu amplificateur: étant contenu dans une cavité de Fabry-Pérot. Une deuxième cavité Fabry-Pérot est utilisée pour créer le miroir à conjugaison de phase.

WO-A-95 25367 divulgue un laser à miroir à conjugaison de phase dans lequel le milieu de gain est distinct du milieu non-linéaire dans lequel le miroir à conjugaison de phase est généré. La cavité résonnante de WO-A-95 25367 est une cavité en anneau.

Dans le laser de l'invention, à cavité de Fabry-Pérot et miroir à conjugaison de phase pompé dans sa propre cavité, le miroir à conjugaison de phase est créé par interférences entre des ondes se propageant en sens inverses et de polarisation linéaire et sur lequel se réfléchit, avec conjugaison de phase, une onde sonde incidente de polarisation linéaire orthogonale.

Dans ce cas, il peut être prévu dans la cavité de Fabry-Pérot, de part et d'autre du milieu amplificateur et en-deça de deux miroirs de fond de cavité, une lame quart-d'onde, d'un côté, et un prisme de Glan associé à un miroir réfléchissant, de l'autre côté.

Cette forme de réalisation avec des ondes pompes et sonde à polarisation croisées, reste toutefois aussi souple que la précédente grâce à sa géométrie, non plus en X, mais alignée.

Dans une autre forme encore de réalisation d'un laser non conforme à l'invention à cavité de Fabry-Pérot, le miroir à conjugaison de phase est pompé hors de sa propre cavité.

Dans ce cas, une deuxième cavité de Fabry-Pérot peut être dérivée de la première pour créer le miroir à conjugaison de phase, avantageusement par un prisme de Glan, d'extraction d'une onde faible de polarisation orthogonale à celle de l'onde optique stationnaire générée par l'émission stimulée dans la première cavité, associé à un miroir extérieur à la première cavité.

Dans toutes ses formes de réalisation, le laser de l'invention est finalement un laser assez simple, un laser classique à cavité de Fabry-Pérot perfectionné.

C'est pourquoi le demandeur entend également revendiquer un procédé d'amélioration, ou de rénovation, d'un laser classique à milieu amplificateur dans une cavité définie par des miroirs de fond de cavité, caractérisé par le fait qu'on le transforme en un laser selon l'invention.

Dans une mise en oeuvre du procédé, on intercale entre le milieu amplificateur et les miroirs de fond de cavité, d'un coté, une lame quart-d'onde ou un prisme de Fresnel et, de l'autre côté, un ensemble d'un prisme de Glan et d'un miroir.

L'invention sera mieux comprise à l'aide de la description suivante de plusieurs formes de réalisation du laser de l'invention, en référence au dessin annexé, sur lequel :
- la figure 1 illustre l'effet sur une onde de la réflexion entre deux traversées d'un milieu retardateur de phase ;
- la figure 2 illustre l'effet de la figure 1 appliqué à une cavité laser ;
- la figure 3 représente une première forme de réalisation d'un laser non conforme à l'invention, à miroir à conjugaison de phase à pompage intracavité, à géométrie en X ;
- la figure 4 est une représentation schématique et grossie du laser de la figure 3, pour l'analyse d'un faisceau particulier ;
- la figure 5 représente une forme de réalisation du laser de l'invention, à miroir à conjugaison de phase à pompage intracavité, à géométrie alignée en polarisations croisées ;
- la figure 6 est une représentation schématique et grossie du laser de la figure 5, pour l'analyse d'un faisceau particulier;
- la figure 7 représente une forme de réalisation d'un laser non conforme à l'invention, à miroir à conjugaison de phase à pompage extracavité.

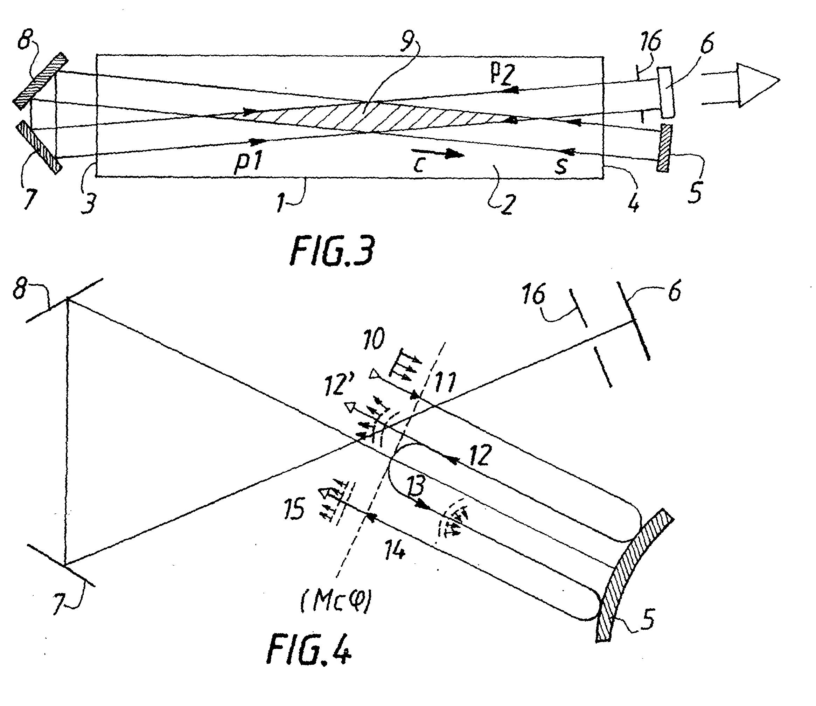

En référence à la figure 3, le résonateur laser de Fabry-Pérot comporte une enceinte 1 contenant un milieu amplificateur 2, avec, à ses deux extrémités 3, 4, des fenêtres, non représentées, de passage des faisceaux laser, l'enceinte 1 étant disposée entre deux miroirs de fond de cavité 5, 6, d'un côté, et deux miroirs d'extrémité et de repliement 7, 8, de l'autre côté. On notera que les miroirs d'extrémité ne sont pas des miroirs de fond de cavité. L'extrémité dont s'agit doit être considérée comme une notion de structure et non d'optique, la cavité s'étendant de l'un des deux miroirs 5, 6 à l'autre. Les miroirs 7, 8 sont des miroirs intracavité.

Le miroir 6 sert de miroir d'extraction. Les trois autres miroirs sont des miroirs totalement réfléchissants. Les quatre miroirs sont inclinés pour que les deux miroirs 7, 8 assurent leur fonction de repliement et que les ondes laser, dans la cavité, se propagent suivant des faisceaux formant deux barres en X, avec une zone d'intersection 9 sensiblement au centre de la cavité.

Sur chaque barre du X, les deux ondes, par exemple p1 et p2, se propageant en sens inverses et forment un réseau dans le milieu laser vis-à-vis d'une onde S qui se propage sur l'une des moitiés de l'autre barre vers la zône d'intersection 9, avant d'y être réfléchie selon l'onde C par mélange à quatre ondes avec conjugaison de phase. Réciproquement, il en est de même pour les ondes de l'autre bras du X.

L'efficacité du mélange dépend de la nonlinéarité du gain et des intensités des ondes. On sait qu'elles sont élevées dans un milieu à fort gain, comme c'est le cas dans les lasers de puissance (excimer, néodyme - Yag, CO₂, etc.)

De plus et en référence à la figure 4, qui ne correspond pas rigoureusement à la figure 3, du fait de la dissymétrie introduite par la convexité du miroir 5 qui supprime la contribution du réseau s'étendant le long de la barre sur laquelle se trouve précisément le miroir 5, l'analyse montre que, pour chaque faisceau 10 qui revient sur lui-même 15 après une réflexion non linéaire 12 sur le miroir à conjugaison de phase 9 symbolisé ici par l'un de son infinité de plans M_{cϕ}, précédée 12 et suivie 14 d'une réflexion sur un miroir de fond de cavité 5, il y a compensation des déphasages subis, à l'inverse du faisceau 12' qui subit une simple réflexion sur le miroir de fond de cavité 5. Un argument de phase, par exemple la courbure (convexe) du miroir 5 permet de faire la différence entre les faisceaux 15 et 12'. Le faisceau 12' (divergent) peut alors être éliminé par un iris 16 avant extraction par le miroir 6.

La correction de déphasage de propagation entraîne aussi que, comme dans tout résonateur à miroir à conjugaison de phase par mélange à quatre ondes, l'accord de cavité a lieu quelle que soit sa longueur.

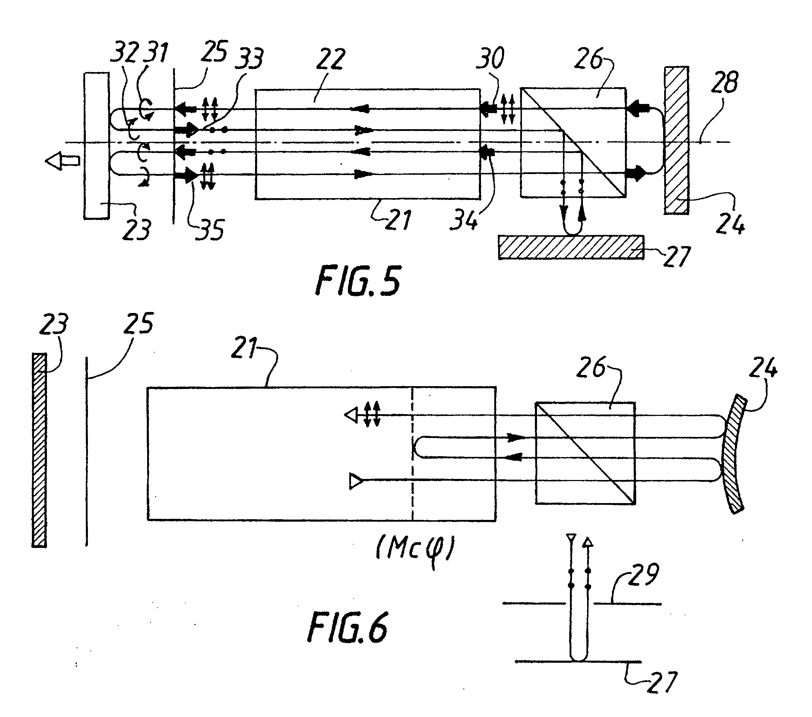

En référence à la figure 5, le résonateur de Fabry-Pérot, ici à géométrie alignée, comporte, entre deux miroirs 23, 24 de fond de cavité, une enceinte 21 contenant un milieu amplificateur 22 et, entre l'enceinte 21 et chaque miroir de fond de cavité, d'un côté, une lame quart-d'onde (λ/4) 25 et, de l'autre côté, un prisme de Glan 26 associé à un miroir 27. Un prisme de Glan transmet un faisceau incident de polarisation verticale et réfléchit un faisceau incident de polarisation horizontale. L'extraction s'effectue ici par le miroir 23.

En géométrie alignée, la distinction entre les ondes pompes et sonde, soit celles formant le réseau de gain et celle qui se réfléchit sur lui, qui était imposée dans la forme de réalisation des figures 3, 4 par la configuration en X, résulte ici du choix des polarisations croisées.

Par souci de clarté, sur les figures 5, 6, on a artificiellement décalé le faisceau après réflexion. On considère au départ une onde 30, polarisée linéairement dans le plan vertical, du côté du prisme de Glan 26 entrant dans le milieu amplificateur 22. Après la traversée de la lame λ/4 25, dont les axes sont inclinés de 45° sur l'axe optique 28 du laser, la polarisation est circulaire 31, inversée 32 après réflexion sur le miroir 23, puis linéaire 33 après nouvelle traversée de la lame 25. Après avoir traversé le milieu de gain 22, l'onde 33 est réfléchie par le prisme de Glan 26 vers le miroir 27, qui renvoie une onde 34 vers la cellule 21. Après un nouveau chemin lame 25 - miroir 23 - lame 25, l'onde émergente 35, de polarisation linéaire verticale, se confond avec l'onde 30 après amplification, traversée du prisme 26 dans les deux sens et réflexion sur le miroir 24, la condition d'ondes stationnaires étant ainsi remplie.

Les quatre traversées du milieu de gain 22 créent deux réseaux, associés aux interférences entre ondes se propageant en sens inverses et de polarisation linéaire horizontale 33, 34, ou verticale 30, 35, et sur lesquels chaque onde incidente, de polarisation orthogonale, se réfléchit avec conjugaison de phase.

Comme dans la géométrie en X de la figure 4, et en référence à la figure 6, un argument de phase - miroir 24 convexe associé à un iris 29 devant le miroir 27 - privilégie l'oscillation du résonateur à miroir à conjugaison de phase recherché.

La lame λ/4 25 peut être remplacée par un prisme de Fresnel, pour une meilleure tenue au flux optique, ou par un miroir équivalent.

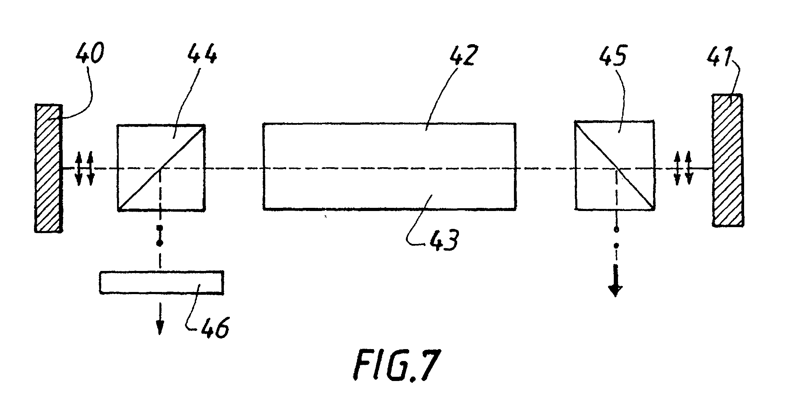

En référence à la figure 7, le résonateur de Fabry-Pérot comprend, entre deux miroirs de fond de cavité totalement réfléchissants 40, 41, une enceinte 42 contenant un milieu amplificateur 43 et, des deux côtés de l'enceinte 42, entre l'enceinte et les miroirs, deux prismes de Glan 44, 45, l'un 44 étant associé à un miroir 46. Dans ce résonateur, le miroir à conjugaison de phase, soumis à un pompage hors de sa propre cavité, est créé par dérivation d'une deuxième cavité de Fabry-Pérot comme expliqué maintenant.

Les prismes de Glan 44 et 45, placés à chaque extrémité du milieu amplificateur 43, séparent les faisceaux de polarisation horizontale réfléchis et de polarisation verticale, transmis, qui participent à deux résonateurs de Fabry-Pérot distincts.

Lorsqu'on excite le milieu amplificateur 43, une onde optique stationnaire de polarisation verticale croit par émission stimulée dans le résonateur de Fabry-Pérot à faibles pertes, limité par les deux miroirs 40 et 41, où elle forme un réseau dans le milieu de gain 43. Sa puissance atteindrait la puissance de saturation, si les biréfringences résiduelles, dans le milieu amplificateur 43 et dans le prisme 44, ainsi que les effets de la diffusion ne donnaient naissance à une onde faible, de polarisation horizontale.

Cette onde faible, extraite par le prisme de Glan 44, réfléchie par le miroir 46, puis amplifiée et diffractée par le réseau du milieu de gain 43, amorce l'oscillation du résonateur de Fabry-Pérot à miroir à conjugaison de phase 46, 43. Ici, la zône de réflexion et la zône non linéaire pompée sont confondues. Le milieu non linéaire 43 du miroir est pompé par les deux faisceaux de polarisation verticale de sens inverses provenant de l'extérieur de sa cavité 46, 43. On extrait le faisceau par réflexion sur le prisme 45 ou, mieux, à travers le miroir 46 afin d'optimiser l'effet de correction de front d'onde.

La sélection de mode est assurée soit par un iris devant le miroir 46 soit par le miroir 46 lui-même s'il s'agit d'un miroir gaussien.

Dans le cas où le coefficient de réflexion du miroir à conjugaison de phase n'est pas suffisamment élevé, on peut prévoir, entre le prisme de Glan 44 et le miroir 46, un amplificateur d'appoint, ici une enceinte similaire à l'enceinte 42, pour y faire naître une émission stimulée, l'enceinte amplificatrice étant excitée en synchronisme avec l'enceinte 42. On peut aussi prévoir, entre l'amplificateur et le miroir 46 une fibre optique ou un guide creux multimode, pour une adduction souple de lumière cohérente vers le poste d'utilisation du laser. On peut aussi utiliser une fibre amplificatrice, par exemple une fibre dopée au néodyme. On peut encore disposer un outil doubleur entre le prisme 44 et le miroir 46 pour essentiellement doubler la fréquence.

Ayant décrit une forme de réalisation du laser de l'invention, on dira un mot du procédé de rénovation des lasers classiques. Cette rénovation par transformation est des plus simples puisqu'on n'a pas à toucher à l'enceinte contenant le milieu amplificateur. Il suffit de procéder à la substitution nécessaire des miroirs, lame quart-d'onde et prismes de Glan aux miroirs de fond de cavité d'origine.

## Revendications

1. Laser à miroir à conjugaison de phase par mélange à quatre ondes dans un milieu amplificateur unique (22), contenu dans une cavité de Fabry-Pérot, ledit miroir (22) étant soumis à un pompage intracavité et généré par des moyens (23-27) exclusivement passifs, par interférences entre des ondes (30,35 ; 33,34) se propageant en sens inverse et de polarisation linéaire, et sur lequel se réfléchit, avec conjugaison de phase, une onde sonde incidente de polarisation linéaire orthogonale.

2. Laser selon la revendication 1, dans lequel lesdits moyens passifs sont agencés pour générer des faisceaux de pompage formant une onde stationnaire dans ladite cavité.

3. Laser selon l'une des revendications 1 et 2, dans lequel il est prévu dans la cavité de Fabry-Pérot, de part et d'autre du milieu amplificateur et en deçà de deux miroirs de fond de cavité (23,24), une lame quart-d'onde (25) d'un côté, et un prisme de Glan (26) associé à un miroir (27) de l'autre côté.

4. Laser selon la revendication 3, dans lequel l'un (24) au moins des miroirs de fond de cavité est un miroir courbe et il est prévu un iris (29) de sélection de mode.

5. Laser selon l'une des revendications 1 et 2, dans lequel l'enceinte (21) du milieu amplificateur est entourée, d'un côté d'un prisme de Fresnel et de l'autre côté d'un prisme de Glan associé à un miroir.

6. Procédé de rénovation d'un laser classique à milieu amplificateur dans une cavité définie par des miroirs de fond de cavité, **caractérisé par le fait qu'**on le transforme en un laser selon l'une des revendications 1 à 5.

7. Procédé selon la revendication 6, dans lequel on intercale entre le milieu amplificateur et les miroirs de fond de cavité, d'un côté une lame quart d'onde ou un prisme de Fresnel, et de l'autre côté un ensemble d'un prisme de Glan et d'un miroir.

## Patentansprüche

1. Laser mit einem phasenkonjugierenden Spiegel durch Vierwellenmischung in einem einzigen laseraktiven Material (22), in einem Fabry-Perot Resonator eingerichtet, **gekennzeichnet dadurch, dass** der sogenannte Spiegel (22) innerhalb des Resonators gepumpt und mit ausschliesslich passiven Mitteln (23-27) erzeugt ist, durch Interferenzen zwischen entgegenlaufenden, linear polarisierten Wellen (30,35 ; 33,34), und an welchem eine linear, rechtwinklig polarisierte einfallende Signalwelle mit Phasenkonjugation reflektiert ist.

2. Laser nach Anspruch 1, bei dem die sogenannten passive Mittel angeordnet sind um Pumpstrahlen zu erzeugen, die eine stehende Welle in dem sogenannten Resonator bilden.

3. Laser nach Anspruch 1 oder 2, dessen Fabry-Perot Resonator auf beiden Seiten des laseraktiven Materials und diesseits der zwei Endspiegel (23,24), mit einer λ/4 Verzögerungsplatte (25) einerseits, und einem Glan Prisma (26) zusammen mit einem Spiegel (27) andererseits, aufgestellt ist.

4. Laser nach Anspruch 3, in dem mindestens einer (24) der Endspiegel mit Krümmungsradius, und eine Modeblende (29) vorausgesehen sind.

5. Laser nach Ansprüche 1 oder 2, in dem das Gehäuse (21) des laseraktiven Materials von einem Fresnel Prisma einerseits, und von einem Glan Prisma zusammen mit einem Spiegel andererseits, umgeben ist.

6. Verfahren zur Erneuerung eines üblichen Lasers, dessen laseraktives Material in einem Fabry-Perot Resonator mit Endspiegel einbegriffen ist, **gekennzeichnet dadurch, dass** er zu einem Laser nach Ansprüche 1 bis 5 verwandelt ist.

7. Verfahren nach Anspruch 6 in dem, zwischen laseraktivem Material und Endspiegel, eine λ/4 Verzögerungsplatte oder ein Fresnel Prisma einerseits, und ein Glan Prisma zusammen mit einem Spiegel andererseits, eingefügt sind.

## Claims

1. Laser with a phase conjugate mirror by four-wave mixing in a single amplifying medium (22), contained in a Fabry-Perot cavity, the said mirror (22) being subjected to intracavity pumping and generated by exclusively passive means (23-27), by interference between linearly polarized waves (30,35 ; 33,34) propagating in opposite directions, and reflected off this mirror, with phase conjugation, is an incident probe wave of linear, orthogonal polarization.

2. Laser according to Claim 1, in which the said passive means generate pump beams forming a standing wave in the said cavity.

3. Laser according to either of Claims 1 and 2, in which the Fabry-Perot cavity is provided with, on either side of the amplifying medium and internal to the two cavity end-mirrors (23-24), a quarter-wave plate (25) on one side, and a Glan prism (26) associated with a mirror (27) on the other side.

4. Laser according to Claim 3, in which at least one (24) of the cavity end-mirrors is a curved mirror, and a mode-selection aperture stop (29) is provided.

5. Laser according to either of Claims 1 and 2, in which, inserted between the amplifying medium housing (21) and the cavity-end mirrors, are, on one side, a Fresnel prism, and, on the other side, a Glan prism associated with a mirror.

6. Method of renovating a standard laser with an amplifying medium in a cavity defined by cavity end-mirrors, **characterized in that** it is converted into a laser according to one of Claims 1 to 5.

7. Method according to Claim 6, in which, inserted between the amplifying medium and the cavity-end mirrors are, on one side, a quarter-wave plate or a Fresnel prism, and, on the other side, a combination of a Glan prism and a mirror.
